# EUROPÄISCHE PATENTSCHRIFT

(11) **EP 3 357 382 B1**
(45) Veröffentlichungstag und Bekanntmachung des Hinweises auf die Patenterteilung: **24.04.2019**
(21) Anmeldenummer: 17154463.8
(22) Anmeldetag: 02.02.2017
(51) Int. Cl.: A47J 43/22, B65D 77/04

(54) **STREUVORRICHTUNG MIT EINEM AUSSENBEHÄLTER UND EINEM DARIN BEWEGLICHEN INNENBEHÄLTER**
DISTRIBUTION DEVICE WITH AN OUTER CONTAINER AND A MOVABLE INNER CONTAINER THEREIN
DISPOSITIF DE COMMANDE COMPRENANT UN RÉCIPIENT EXTERNE ET UN RÉCIPIENT INTERNE MOBILE EN SON SEIN

(43) Veröffentlichungstag der Anmeldung: 08.08.2018
(73) Patentinhaber: keeeper GmbH, 32351 Stemwede (DE)
(72) Erfinder: Dumler, Alex, 20359 Hamburg (DE); Witt, Florian M., 21465 Wentorf (DE); Königsberger, Johanna, 22765 Hamburg (DE); Hecker, Matthias, 22609 Hamburg (DE); Plate, Torsten, 22089 Hamburg (DE); Ferrier, Andrew, Ottawa, Ontario K2K2N1 (CA)
(74) Vertreter: Weeg, Thomas

(56) Entgegenhaltungen:
- EP-A2- 0 526 706
- WO-A1-02/064006
- US-A- 2 695 708
- US-A1- 2014 299 049

## Beschreibung

Die vorliegende Erfindung bezieht sich auf eine Streuvorrichtung mit einem Außenbehälter und einem darin beweglichen Innenbehälter zur Abgabe eines granulat- oder pulverförmigen Streugutes aus einem im Innenbehälter ausgebildeten Bevorratungsraum durch ein in der Abgabeöffnung der Streuvorrichtung angeordnetes Sieb.

Gattungsgemäße Vorrichtungen sind aus den Schriften EP 0 526 706 A2 und US 2,294,393 bekannt. Die dort offenbarten Vorrichtungen dienen beispielsweise zur Abgabe und Dosierung pulverförmiger Medikamente. Der Innenbehälter ist innerhalb des Außenbehälters frei beweglich, um beim Schütteln des Außenbehälters Eigenbewegungen ausführen zu können, in deren Folge sich beim harten Anstoß des Innenbehälters an die Innenfläche der Außenwand des Außenbehälters der dabei entstehende Stoßimpuls auf das im Innenbehälter befindliche pulverförmige Medikament überträgt. Dadurch löst sich das pulverförmige Medikament im Innenbehälter und rieselt aus einer im Innenbehälter befindlichen Öffnung in den Außenbehälter und von dort aus auch aus dem Außenbehälter heraus. Dabei kann sich ein Sieb in der Abgabeöffnung des Innenbehälters und/oder in der Abgabeöffnung des Außenbehälters befinden.

Diese Art, durch die Bewegung eines Innenbehälters ein Streugut zu lösen und aus der Streuvorrichtung abzugeben, hat sich nicht für alle Arten von Streugut bewährt. Insbesondere Streugüter, die in Haushalten zur Zubereitung von Speisen genutzt werden, wie beispielweise Mehl, Puderzucker oder Gewürze, neigen dazu, Klumpen zu bilden, die sich nicht durch bloßes Schütteln der Streuvorrichtung wieder auflösen. Dadurch lassen sich solche Streugüter beim Ausstreuen mit solchen Vorrichtungen nur schwer passend dosieren. Für solcherlei Streugut werden deshalb keine Streuvorrichtungen mit einem Innen- und einem Außenbehälter verwendet, sondern solche, bei denen ein bewegtes Förderelement über ein Sieb bewegt wird. Dabei werden die auszustreuenden Partikel vom Förderelement über die Siebfläche bewegt, von den Materialstegen des Siebes erfasst und vom Förderelement in die Sieböffnungen gedrückt, von wo aus die Partikel dann aus der Streuvorrichtung herausfallen. Beispiele für solcherlei Streuvorrichtungen finden sich in den Schriften EP 0 205 935 A1 oder DE 83 32 094.6. Bei diesen Vorrichtungen werden zum Antrieb des Förderelements jeweils aber aufwendige Mechaniken verwendet, die schwer sauber zu halten und störanfällig sind.

Es ist die Aufgabe der vorliegenden Erfindung, eine Streuvorrichtung zu schaffen, die einen einfach bedienbaren und leicht zu reinigenden Antrieb für die Siebeinrichtung zu schaffen.

Die Aufgabe wird für eine gattungsgemäße Vorrichtung gelöst, indem die Seitenwand des Außenbehälters in einem Bereich eine Öffnung aufweist, durch die ein erster Abschnitt der Seitenwand des Innenbehälters beim Umgreifen des Außenbehälters erfassbar ist, im Inneren des Außenbehälters zwischen einem zweiten Abschnitt der Seitenwand des Innenbehälters und der Seitenwand des Außenbehälters ein Zwischenraum ausgebildet ist, der Innenbehälter in seiner Ruhelage mit dem ersten Abschnitt seiner Seitenwand durch zumindest ein im Zwischenraum angeordneter Kraftspeicher gegen die Öffnung in der Seitenwand des Außenbehälters gedrückt ist, so dass die Seitenwand des Innenbehälters die Öffnung zum Inneren des Außenbehälters hin verdeckt, der Innenbehälter gegen die Kraft des zumindest einen Kraftspeichers quer zur Längsachse des Außenbehälters in eine Verlagerungsstellung beweglich ist, und der Innenbehälter eine Austragöffnung aufweist, die bei einer Verlagerungsbewegung des Innenbehälters aus der Ruhelage in eine Verlagerungsstellung über ein im Boden des Außenbehälters befindliches Sieb mit einer zugehörigen Abgabeöffnung bewegt ist.

Die Anordnung eines Innenbehälters in einem Außenbehälter sowie dessen Beweglichkeit gegen einen oder mehrere Kraftspeicher schaffen einen technisch einfachen und leicht bedienbaren Aufbau einer Streuvorrichtung. Um mit der Streuvorrichtung Streugut auszustreuen, genügt es, den Außenbehälter in eine Hand zu nehmen und mit den Fingern so zu umgreifen, dass die Finger im Bereich der Öffnung auf der Seitenwand des Innenbehälters liegen. Dann wird die Streuvorrichtung über die Stelle gehalten, an der das Streugut ausgestreut werden soll. Um mit dem Streuen zu beginnen, müssen nur die Finger gegen den Innenbehälter gedrückt werden, damit sich dieser in den Innenraum des Außenbehälters gegen die Kraftspeicherkraft hineinbewegt, und wieder lockerer gelassen werden, damit der eingedrückte Kraftspeicher den Innenbehälter wieder in die Ruhelage zurückbewegt. Bei den Querbewegungen des Innenbehälters innerhalb des Außenbehälters wird immer die Austragöffnung über das darunter befindliche Sieb bewegt. Dabei rieselt Streugut aus dem Innenbehälter in das Sieb und von dort fällt es durch die Abgabeöffnung aus der Streuvorrichtung heraus. Die Bewegungen des Innenbehälters werden so lange wiederholt, wie das Streugut aus der Streuvorrichtung rieseln soll.

Die Bauteile des Streubehälters sind kostengünstig herstellbar, beispielsweise als Kunststoff-Spritzguss-Bauteile. Der Streubehälter besteht im Wesentlichen nur aus dem Außen- und Innenbehälter und den oder die Kraftspeicher. Der eine oder mehrere Kraftspeicher können auch als Kunststoffteile hergestellt werden. Als Kraftspeicher kann beispielsweise eine Feder oder ein elastischer Schaumstoffkörper oder vergleichbare Elemente verwendet werden, die bei einer Verformung eine Kraft in sich aufnehmen und diese bei einer Rückverformung wieder abgeben. Hinzu kommen die Bauteile für die Austragöffnung und das Sieb, die aber auch nicht besonders komplex und ebenfalls kostengünstig aus Kunststoff oder einem anderen Werkstoff herstellbar sind. Alle Bauteile sind leicht zu reinigen und können dafür in die Spülmaschine gelegt werden.

Nach einer Ausgestaltung der Erfindung ist der Außenbehälter nach oben hin offen und der Innenbehälter ist mit zumindest einem daran befestigten Kraftspeicher nach oben hin aus dem Außenbehälter entnehmbar. Die Reinigung der einzelnen Bauteile ist dadurch schnell und leicht möglich. Nach der Reinigung der Bauteile kann der Innenbehälter ebenfalls schnell und einfach wieder entlang der Längsachse des Außenbehälters in seine Gebrauchsstellung im Außenbehälter eingeschoben werden. Nach unten hin liegen dann die Austragöffnung des Innenbehälters und das Sieb im Außenbehälter in der Gebrauchsstellung des Innenbehälters wieder funktionsbereit direkt aufeinander. Besondere Montagearbeiten sind dabei nicht erforderlich, die Streuvorrichtung ist sofort wieder betriebsbereit.

Nach einer Ausgestaltung der Erfindung ist zumindest ein Kraftspeicher in der Gebrauchsstellung des Innenbehälters im Außenbehälter mit der Seitenwand des Außenbehälters form- und/oder kraftschlüssig verbindbar. Durch die Verbindung des einzelnen oder mehrerer Kraftspeicher mit der Außenwand des Außenbehälters wird der Innenbehälter im Außenbehälter in seiner Gebrauchsstellung lagefixiert, wenn die gegenüberliegende Seite des zumindest einen Kraftspeichers auch form- und/oder kraftschlüssig mit dem Innenbehälter verbunden ist. Der Innenbehälter kann dann nicht so leicht aus dem Außenbehälter herausfallen. Die Verbindung des Kraftspeichers mit den Seitenwänden kann beispielsweise durch einen Knopf realisiert werden, der in eine Ausnehmung in den Seitenwänden des Innen- und/oder Außenbehälters einrastet und dort nur von außen beziehungsweise innen von der Seite her wieder herausgedrückt oder herausgezogen werden kann.

Nach einer Ausgestaltung der Erfindung sind ein oder mehrere Kraftspeicher als Elliptikfeder ausgebildet. Bei einer Elliptikfeder sind zwei Blattfedern paarweise gegeneinander zu einer annähernden Ellipsen- oder Ovalform zusammengesetzt oder direkt einstückig hergestellt. Wegen der mittigen Belastung ist das Biegemoment in der Mitte der Federlänge am größten. Durch die doppelte ausgebildete Blattfeder können ausreichend starke Rückstellkräfte in der Feder aufgebaut werden, um den Innenbehälter wieder in seine Ruhelage zurück zu bewegen, wenn die mit den Fingern auf den Innenbehälter ausgeübte Druckkraft nachlässt.

Nach einer Ausgestaltung der Erfindung weist das obere Ende des Innenbehälters ein Kragenstück auf, das sich nach oben hin erweitert und den Außenbehälter überragt. Das Kragenstück kann ein gesondertes Bauteil sein, dass mit dem Innenbehälter nachträglich verbunden worden ist, oder das Kragenstück ist einteilig zusammen mit dem Innenbehälter in einem Werkzeug für den Kunststoffspritzguss einstückig gegossen worden. Durch das Kragenstück kann der Innenbehälter leicht von oben befüllt werden. Wenn das Kragenstück sich dabei nach oben hin erweitert, insbesondere in einem Abschnitt, der über den Außenbehälter übersteht, kann das Kragenstück auch den Zwischenraum zwischen dem Innen- und Außenbehälter überdecken, in dem sich der zumindest eine Kraftspeicher befindet, ohne dass das Kragenstück beim Gebrauch der Streuvorrichtung mit dem Außenbehälter kollidiert. Durch den über den Zwischenraum überstehenden Kragen wird vermieden, dass beim Befüllen des Innenbehälters Streugut in den Zwischenraum gelangen und dort die Beweglichkeit des Innenbehälters stören kann.

Nach einer Ausgestaltung der Erfindung ist in das Kragenstück ein Deckel einsetzbar. Mit dem Deckel wird der Innenraum des Innenbehälters nach oben hin verschlossen. Der Deckel ist abnehmbar, um den Innenbehälter befüllen zu können. Der Deckel schützt den Inhalt des Innenbehälters gegen von außen eindringenden Schmutz. Der Deckel kann mit einem elastischen Dichtring versehen sein, um die Abdichtwirkung zu verbessern.

Nach einer Ausgestaltung der Erfindung ist auf die an der Unterseite des Außenbehälters befindliche Abgabeöffnung ein Deckel aufsetzbar. Wenn sich noch Streugut im Innenbehälter befindet, kann dieses nicht mehr unkontrolliert aus der Streuvorrichtung herausrieseln, wenn die Streuvorrichtung weggestellt wird. Auch Schmutz kann nicht von unten her in das Sieb und den Innenbehälter gelangen.

Nach einer Ausgestaltung der Erfindung ist auf der Innenseite der Seitenwand des Außenbehälters eine sich parallel zur Längsachse des Außenbehälters erstreckende Führungsnut ausgebildet. Die Führungsnut dient dem Zweck, um den zumindest einen Kraftspeicher und/oder den Innenbehälter beim Einschieben in den Innenraum des Außenbehälters zu führen. Dadurch wird die Handhabung erleichtert und der oder die Kraftspeicher in die richtige Einbaulage geleitet.

Nach einer Ausgestaltung der Erfindung weist das im Boden des Außenbehälters befindliche Sieb Siebstege auf, die sich schräg oder quer zur Bewegungsrichtung des Innenbehälters im Außenbehälter erstrecken. Durch die Schräg- oder Quererstreckung der Siebstege ergibt sich ein guter reibender Effekt auf das Streugut, wenn es über die Siebstege gleitet, wodurch mit einer ziehenden Bewegung kleinere Partikel von Materialklumpen abgeschert werden können.

Nach einer Ausgestaltung der Erfindung sind in der Austragöffnung im Innenbehälter Siebstege ausgebildet, die eine gegenläufige Ausrichtung zu den im Boden des Außenbehälters befindlichen Siebstegen aufweisen. Durch die zusätzlich zu den Siebstegen im Außenbehälter vorgesehenen Siebstege im Innenbehälter kann das Streugut zusätzlich mit er Scherbewegung zischen den Siebstegen zerkleinert werden.

Es wird ausdrücklich darauf hingewiesen, dass jede der vorstehend beschriebenen Ausgestaltungen der Erfindung jeweils für sich, aber auch in einer beliebigen Kombination untereinander mit dem Gegenstand des Hauptanspruches kombinierbar ist, soweit dem keine technisch zwingenden Hindernisse entgegenstehen.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Ansicht auf eine Streuvorrichtung,
- Fig. 2:: eine Ansicht auf die in Fig. 1 dargestellte Streuvorrichtung, bei der der Innenbehälter aus dem Außenbehälter herausgehoben ist,
- Fig. 3:: die Streuvorrichtung, wenn sie beim Gebrauch in der Hand gehalten ist,
- Fig. 4:: eine Schnittansicht durch die Streuvorrichtung mit dem Innenbehälter in der Ruhelage, und
- Fig. 5:: eine Schnittansicht durch die Streuvorrichtung mit dem Innenbehälter in der Verlagerungsstellung.

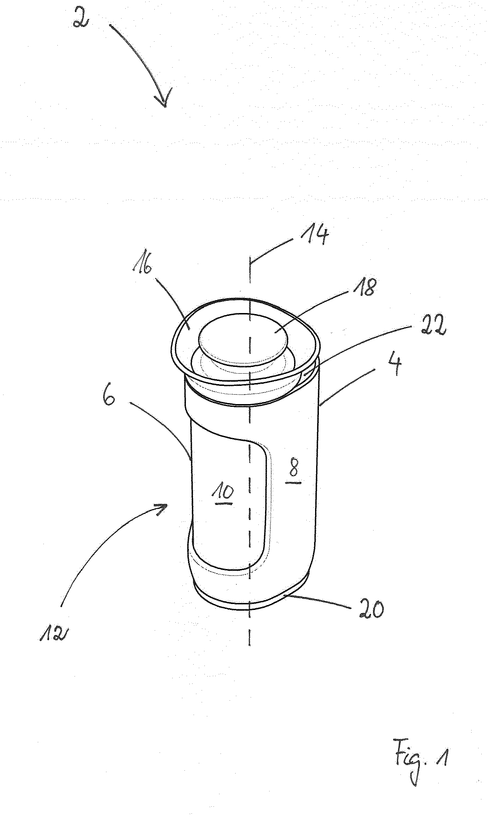

In Fig. 1 ist eine Ansicht auf die Streuvorrichtung 2 gezeigt. Die Streuvorrichtung 2 verfügt über einen Außenbehälter 4 und einen darin eingestellten Innenbehälter 6. Der Außenbehälter 4 verfügt über eine Seitenwand 8, der Innenbehälter weist eine Seitenwand 10 auf. In der Seitenwand 8 des Außenbehälters 4 befindet sich eine Öffnung 12, durch die die Seitenwand 10 des Innenbehälters 6 erfasst werden kann.

Die Streuvorrichtung 2 und der Außenbehälter 4 verfügen über eine Längsachse 14, die sich in vertikaler Richtung erstreckt. Der Innenbehälter 6 ist quer zu dieser Längsachse 14 bewegbar, indem der Innenbehälter 6 aus seiner in Fig. 1 dargestellten Ruhelage nach innen in eine Verlagerungsstellung und wieder zurück in die Ruhelage bewegt wird.

Um den Innenbehälter 6 einfacher befüllen zu können, weist das obere Ende des Innenbehälters 6 ein Kragenstück 16 auf. Das Kragenstück 16 erweitert sich nach oben hin trichterartig, wodurch das Einfüllen von rieselfähigen Schüttgütern vereinfacht wird. Außerdem überdeckt das Kragenstück 16 zumindest teilweise den Zwischenraum 22 im Inneren des Außenbehälters 4.

In das Kragenstück 16 ist im Ausführungsbeispiel ein Deckel 18 eingesetzt. Der Deckel 18 schützt das im Innenraum des Innenbehälters 6 befindliche Streugut vor Verschmutzungen.

An der Unterseite des Außenbehälters 4 ist ein Deckel 20 aufgesetzt. Der Deckel 20 verhindert, dass Streugut unbeabsichtigt aus der Streuvorrichtung austritt. Die Streuvorrichtung 2 kann auf dem unteren Deckel 20 abgestellt werden. Der Deckel 20 verfügt bevorzugt über eine plane Fläche, die als Aufstellfläche nutzbar ist.

In der Fig. 1 ist in der Öffnung 12 ein erster Abschnitt der Seitenwand 10 erkennbar. Die Öffnung 12 ist so groß, dass in sie beim Umfassen des Außenbehälters 4 mit einer Hand mehrere Finger eingelegt werden können. Die Finger ruhen dann auf der Seitenwand 10 des Innenbehälters 6, von der ein erster Abschnitt im Bereich der Öffnung 12 erkennbar ist.

Im Bereich eines zweiten Abschnitts der Seitenwand 10 des Innenbehälters 6 befindet sich ein Zwischenraum 22, in dem die Seitenwand 10 in der Ruhelage des Innenbehälters 6 einen Abstand zur benachbarten Seitenwand 8 des Außenbehälters 4 aufweist. In dem Zwischenraum 22 können Federn 24 als ein Ausführungsbeispiel für Kraftspeicherelemente angeordnet sein, gegen die der Innenbehälter 6 aus der Ruhelage innerhalb des Außenbehälters 4 beweglich ist.

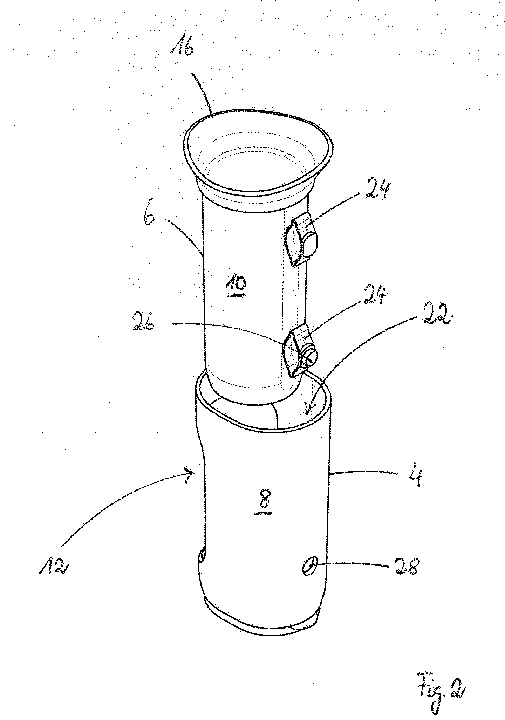

In Fig. 2 ist eine Ansicht auf die in Fig. 1 dargestellte Streuvorrichtung 2 gezeigt, bei der der Innenbehälter 6 aus dem Außenbehälter 4 herausgehoben ist. In dieser Ansicht ist erkennbar, dass sich die Öffnung 12 über einen größeren Winkelbereich des Außenumfangs des Außenbehälters 4 erstreckt. Im Ausführungsbeispiel ist der Winkel größer als 90°, damit die Seitenwand 10 des Innenbehälters auch noch in eingedrückter Stellung von den Fingern gut betätigbar ist.

In Fig. 2 sind gut die Federn 24 erkennbar, die auf den dem Zwischenraum 22 zugewandten zweiten Abschnitt der Seitenwand 10 des Innenbehälters 6 aufgesetzt sind. Die Federn 24 sind in Fig. 2 in einer entspannten Stellung gezeigt. Wenn der Innenbehälter 6 in den Außenbehälter 4 eingeschoben ist, sollten sich die Federn 24 unter einer zumindest leichten Anspannung befinden, damit sie den Innenbehälter 6 zumindest leicht gegen die Öffnung 12 drücken können. Dadurch bleibt die Öffnung 12 in der Ruhelage des Innenbehälters 6 von der Seitenwand 10 des Innenbehälters 6 abgedeckt und geschlossen.

Auf der unteren Feder 24 befindet sich im Ausführungsbeispiel ein Knopf 26, der in der eingeschobenen Betriebsstellung des Innenbehälters 6 in den Außenbehälter 4 in die Einrastöffnung 28 einrasten kann. Durch die Verbindung des Knopfes 26 mit der Einrastöffnung 28 kann der Innenbehälter 6 nicht mehr im Innenraum des Außenbehälters 4 um die Längsachse 14 rotieren. Dadurch verbessert sich die Bedienbarkeit und das Griffgefühl bei der Betätigung des Innenbehälters 6 während des Gebrauchs.

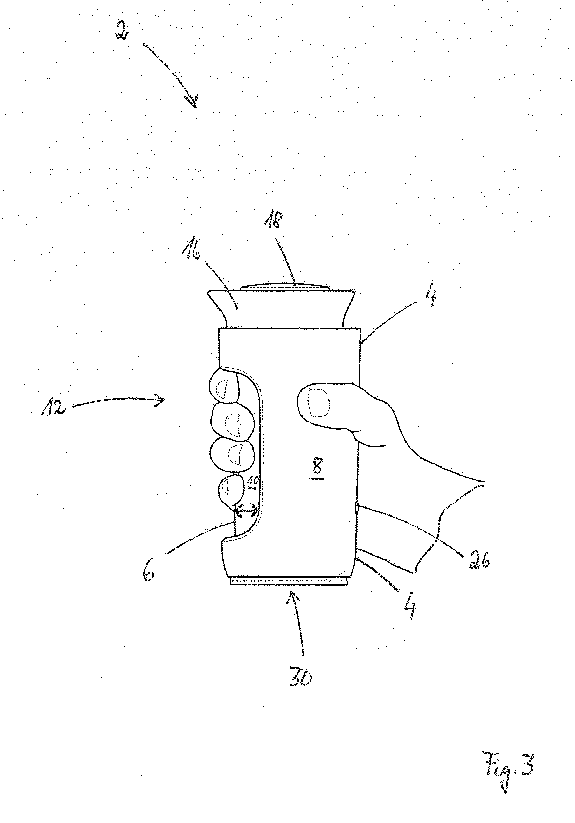

In Fig. 3 ist die Streuvorrichtung 2 gezeigt, wenn sie beim Gebrauch in der Hand einer Bedienperson gehalten ist. In dieser Ansicht ist gut erkennbar, dass die Öffnung 12 groß genug ist, um die Anlage von vier Fingern auf dem ersten Abschnitt der Seitenwand 10 des Innenbehälters 6 zu ermöglichen. Während die Hand den Außenbehälter 4 umfasst, können die auf der Seitenwand 10 des Innenbehälters 6 aufliegenden Finger diesen nach innen in den Innenraum des Außenbehälters 4 eindrücken und wieder zurückspringen lassen, wie dies durch den Doppelpfeil angedeutet ist. Die Bewegungsrichtung des Innenbehälters 6 ist somit im Wesentlichen quer zur Längsachse 14 der Streuvorrichtung 2. Durch abwechselndes Drücken und Entlasten des Innenbehälters 6 mit den Fingern kann der Innenbehälter 6 innerhalb des Außenbehälters 4 oszillierende Bewegungen ausführen. Dabei kann der Außenbehälter 4 der Streuvorrichtung 2 über einem Streupunkt gehalten werden, auf den das aus der Streuvorrichtung 2 austretende Streugut herabrieseln soll.

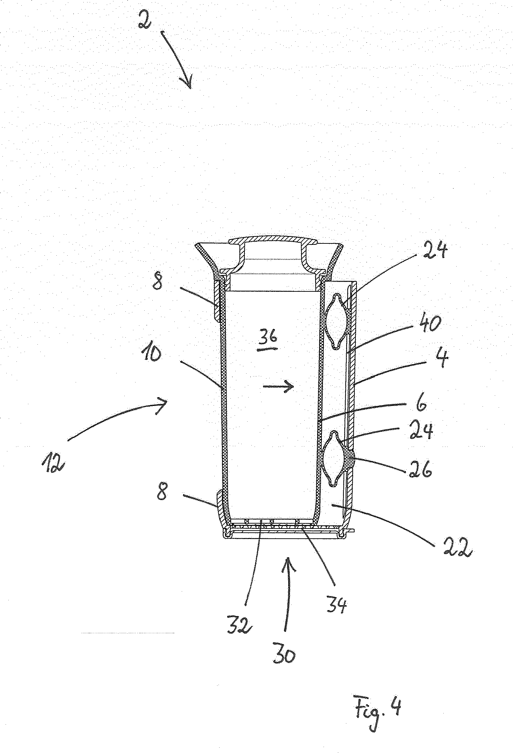

In Fig. 4 ist eine Schnittansicht durch die Streuvorrichtung 2 gezeigt, bei der sich der Innenbehälter 6 in seiner Ruhelage befindet. In der Ruhelage wird der erste Abschnitt der Seitenwand 10 des Innenbehälters 6 gegen die die Öffnung 12 umgrenzende Seitenwand 8 des Außenbehälters 4 gedrückt. In der Ruhelage des Innenbehälters 6 ist der Zwischenraum 22 maximal groß. Der Innenbehälter 6 bleibt in seiner in Fig. 4 gezeigten Ruhelage, weil er von den Federn 24 in dieser Position gehalten wird. Eine Verlagerung des Innenbehälters 6 in Richtung des eingezeichneten Pfeils ist nur möglich, wenn der Innenbehälter 6 durch eine einwirkende Kraft gegen die Federn 24 verschoben wird.

In Fig. 4 ist erkennbar, dass sich in der Abgabeöffnung 30 des Außenbehälters 4 ein Sieb 34 befindet, durch das das im Bevorratungsraum 36 befindliche Streugut nach unten aus der Streuvorrichtung 2 herausfallen kann. Am unteren Ende des Innenbehälters 6 befindet sich eine Austragöffnung 32, durch die das Streugut aus dem Bevorratungsraum 36 aus dem Innenbehälter 6 heraus in den Bereich des Siebes 34 gelangen kann.

Schließlich ist in Fig. 4 noch eine Führungsnut 40 erkennbar, an der entlang die Federn 24 und/oder Teile der Seitenwand 10 des Innenbehälters 6 in den Innenraum des Außenbehälters 4 eingeführt werden können. Die Führungsnut 40 befindet sich auf der Innenseite der Seitenwand 8 des Außenbehälters 4. Sie erstreckt sich parallel zur Längsachse 14 des Außenbehälters, wobei die Parallelität bei einer leichten Konizität des Außenbehälters an diese Konizität angepasst sein kann.

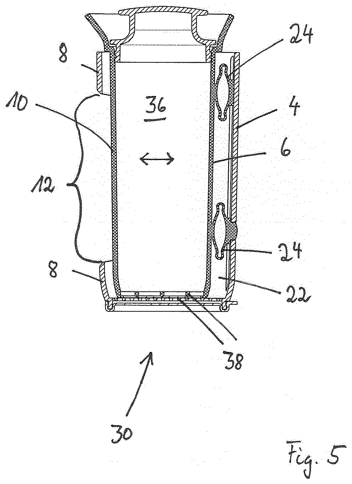

In Fig. 5 ist der Innenbehälter 6 in einer Verlagerungsstellung gezeigt. In der Verlagerungsstellung ist die Seitenwand 10 des Innenbehälters 6 im Bereich der Öffnung 12 von der die Öffnung 12 umgebenden Seitenwand 8 des Außenbehälters 4 entfernt. Durch die Verlagerung des Innenbehälters 6 innerhalb des Außenbehälters 4 ist der Zwischenraum 22 verkleinert und die Federn 24 sind zusammengedrückt. Die Federn 24 haben dadurch Rückstellkräfte aufgebaut, mit denen der Innenbehälter 6 bei nachlassendem Druck aus der Richtung der Öffnung 12 wieder in die Ruhelage zurückbewegt wird. Die Beweglichkeit des Innenbehälters 6 innerhalb des Außenbehälters 4 gegen und mit der Federkraft der Federn 24 ist durch den Doppelpfeil angedeutet.

In Fig. 5 ist erkennbar, dass sich im Bereich der Abgabeöffnung 30 und der Austragöffnung 32 jeweils Siebstege 38 befinden, die eine Siebsichtung der aus dem Innenbehälter 6 herausfallenden Partikel des Streugutes ermöglichen. Wenn der Innenbehälter 6 innerhalb des Außenbehälters 4 bewegt wird, gleiten die jeweiligen Siebstege 38 übereinander hin und her. Bei dieser Relativbewegung zwischen den Siebstegen 38 können größere Partikel des Streugutes zwischen den Kanten der Siebstege 38 zerkleinert werden.

Das vorstehend beschriebene Ausführungsbeispiel dient nur der Erläuterung der Erfindung. Die Erfindung ist nicht auf das Ausführungsbeispiel beschränkt. Dem Fachmann bereitet es keine Schwierigkeiten, das Ausführungsbeispiel auf eine ihm als geeignet erscheinende Weise abzuändern, um es an einen konkreten Anwendungsfall anzupassen.

## Patentansprüche

1. Streuvorrichtung (2) mit einem Außenbehälter (4) und einem darin beweglichen Innenbehälter (6) zur Abgabe eines granulat- oder pulverförmigen Streugutes aus einem im Innenbehälter (6) ausgebildeten Bevorratungsraum (36) durch ein in der Abgabeöffnung der Streuvorrichtung (2) angeordnetes Sieb, **dadurch gekennzeichnet, dass** die Seitenwand (8) des Außenbehälters (4) in einem Bereich eine Öffnung (12) aufweist, durch die ein erster Abschnitt der Seitenwand (10) des Innenbehälters (6) beim Umgreifen des Außenbehälters (4) erfassbar ist, im Inneren des Außenbehälters (4) zwischen einem zweiten Abschnitt der Seitenwand (10) des Innenbehälters (6) und der Seitenwand (8) des Außenbehälters (4) ein Zwischenraum (22) ausgebildet ist, der Innenbehälter (6) in seiner Ruhelage mit dem ersten Abschnitt seiner Seitenwand (10) durch zumindest einen im Zwischenraum (22) angeordneten Kraftspeicher (24) gegen die Öffnung (12) in der Seitenwand (8) des Außenbehälters (4) gedrückt ist, so dass die Seitenwand (10) des Innenbehälters (6) die Öffnung (12) zum Inneren des Außenbehälters (4) hin verdeckt, der Innenbehälter (6) gegen die Kraft des zumindest einen Kraftspeichers (24) quer zur Längsachse (14) des Außenbehälters (4) in eine Verlagerungsstellung beweglich ist, und der Innenbehälter (6) eine Austragöffnung (32) aufweist, die bei einer Verlagerungsbewegung des Innenbehälters (6) aus der Ruhelage in eine Verlagerungsstellung über ein im Boden des Außenbehälters (4) befindliches Sieb (34) mit einer zugehörigen Abgabeöffnung (30) bewegt ist.

2. Streuvorrichtung (2) nach Anspruch 1, **dadurch gekennzeichnet, dass** der Außenbehälter (4) nach oben hin offen ist und der Innenbehälter (6) mit zumindest einem daran befestigten Kraftspeicher (24) nach oben hin aus dem Außenbehälter (4) entnehmbar ist.

3. Streuvorrichtung (2) nach Anspruch 1 oder 2, **dadurch gekennzeichnet, dass** zumindest ein Kraftspeicher (24) in der Gebrauchsstellung des Innenbehälters (6) im Außenbehälter (4) mit der Seitenwand (8) des Außenbehälters (4) form- und/oder kraftschlüssig verbindbar ist.

4. Streuvorrichtung (2) nach einem der vorhergehenden Ansprüche, **dadurch gekennzeichnet, dass** ein oder mehrere Kraftspeicher (24) als Elliptikfeder ausgebildet sind.

5. Streuvorrichtung (2) nach einem der vorhergehenden Ansprüche, **dadurch gekennzeichnet, dass** das obere Ende des Innenbehälters (6) ein Kragenstück (16) aufweist, das sich nach oben hin erweitert und den Außenbehälter (4) überragt.

6. Streuvorrichtung (2) nach dem vorhergehenden Anspruch, **dadurch gekennzeichnet, dass** in das Kragenstück (16) ein Deckel (18) einsetzbar ist.

7. Streuvorrichtung (2) nach einem der vorhergehenden Ansprüche, **dadurch gekennzeichnet, dass** auf die an der Unterseite des Außenbehälters (4) befindliche Abgabeöffnung (30) ein Deckel (20) aufsetzbar ist.

8. Streuvorrichtung (2) nach einem der vorhergehenden Ansprüche, **dadurch gekennzeichnet, dass** auf der Innenseite der Seitenwand (8) des Außenbehälters (4) eine sich parallel zur Längsachse (14) des Außenbehälters (4) erstreckende Führungsnut (40) ausgebildet ist.

9. Streuvorrichtung (2) nach einem der vorhergehenden Ansprüche, **dadurch gekennzeichnet, dass** das im Boden des Außenbehälters (4) befindliche Sieb (34) Siebstege (38) aufweist, die sich schräg oder quer zur Bewegungsrichtung des Innenbehälters (6) im Außenbehälter (4) erstrecken.

10. Streuvorrichtung (2) nach Anspruch 9, **dadurch gekennzeichnet, dass** in der Austragöffnung (32) im Innenbehälter (6) Siebstege (38) ausgebildet sind, die eine gegenläufige Ausrichtung zu den im Boden des Außenbehälters (4) befindlichen Siebstegen (38) aufweisen.

## Claims

1. Dispersing device (2) comprising an outer container (4) and an inner container (6) that is movable therein for dispensing granular or powdered dispersing material out of a storage chamber (36) formed in the inner container (6) through a sieve which is arranged in the dispensing opening of the dispersing device (2), **characterised in that** the side wall (8) of the outer container (4) has an opening (12) in one region, through which opening a first portion of the side wall (10) of the inner container (6) can be grasped when the outer container (4) is gripped, an intermediate chamber (22) is formed inside the outer container (4) between a second portion of the side wall (10) of the inner container (6) and the side wall (8) of the outer container (4), the inner container (6), in its idle position, is pressed by the first portion of its side wall (10) against the opening (12) in the side wall (8) of the outer container (4) by means of at least one energy accumulator (24) arranged in the intermediate chamber (22), such that the side wall (10) of the inner container (6) covers the opening (12) towards the inside of the outer container (4), the inner container (6) can be moved against the force of the at least one energy accumulator (24), transversely to the longitudinal axis (14) of the outer container (4), into a displaced position, and the inner container (6) has a discharge opening (32) which, when the inner container (6) is displaced out of the idle position into a displaced position, is moved over a sieve (34) that has an associated dispensing opening (30) and is located in the base of the outer container (4).

2. Dispersing device (2) according to claim 1, **characterised in that** the outer container (4) is open towards the top and the inner container (6), with at least one energy accumulator (24) fastened thereto, can be removed from the outer container (4) in the upward direction.

3. Dispersing device (2) according to either claim 1 or claim 2, **characterized in that** at least one energy accumulator (24) can be form-fittingly and/or frictionally connected to the side wall (8) of the outer container (4) when the inner container (6) is in the use position in the outer container (4).

4. Dispersing device (2) according to any of the preceding claims, **characterised in that** one or more energy accumulators (24) are designed as elliptic springs.

5. Dispersing device (2) according to any of the preceding claims, **characterised in that** the upper end of the inner container (6) has a collar part (16) which flares upwardly and projects beyond the outer container (4).

6. Dispersing device (2) according to the preceding claim, **characterised in that** a lid (18) can be inserted into the collar part (16).

7. Dispersing device (2) according to any of the preceding claims, **characterised in that** a lid (20) can be placed on the dispensing opening (30) located on the underside of the outer container (4).

8. Dispersing device (2) according to any of the preceding claims, **characterised in that** a guide groove (40) extending in parallel with the longitudinal axis (14) of the outer container (4) is formed in the inner face of the side wall (8) of the outer container (4).

9. Dispersing device (2) according to any of the preceding claims, **characterised in that** the sieve (34) located in the base of the outer container (4) has sieve strips (38) which extend obliquely or transversely to the direction of movement of the inner container (6) in the outer container (4).

10. Dispersing device (2) according to claim 9, **characterised in that** sieve strips (38) are formed in the discharge opening (32) in the inner container (6), which strips are oriented counter to the sieve strips (38) located in the base of the outer container (4).

## Revendications

1. Dispositif de saupoudrage (2) avec un récipient extérieur (4) et un récipient intérieur (6) mobile à l'intérieur de celui-ci pour distribuer une matière à saupoudrer sous forme de granulés ou de poudre à partir d'un espace de stockage (36) réalisé dans le récipient intérieur (6), à travers un tamis disposé dans l'ouverture de distribution du dispositif de saupoudrage (2), **caractérisé en ce que** la paroi latérale (8) du récipient extérieur (4) présente dans une zone une ouverture (12) à travers laquelle il est possible, quand on entoure le récipient extérieur (4), de saisir une première portion de la paroi latérale (10) du récipient intérieur (6), **en ce qu'**à l'intérieur du récipient extérieur (4) entre une deuxième portion de la paroi latérale (10) du récipient intérieur (6) et de la paroi latérale (8) du récipient extérieur (4) est réalisé un espace intermédiaire (22), **en ce que** dans sa position de repos, le récipient intérieur (6) est poussé par la première portion de sa paroi latérale (10) par au moins un accumulateur d'énergie (24) disposé dans l'espace intermédiaire (22) contre l'ouverture (12) dans la paroi latérale (10) du récipient extérieur (4) de sorte que la paroi latérale (10) du récipient intérieur (6) recouvre l'ouverture (12) vers l'intérieur du récipient extérieur (4), **en ce que** le récipient intérieur (6) peut être déplacé dans une position de décalage contre la force dudit au moins un accumulateur d'énergie (24) transversalement à l'axe longitudinal (14) du récipient extérieur (4), et **en ce que** le récipient intérieur (6) présente une ouverture de déversement (32) qui est déplacée lors d'un mouvement de décalage du récipient intérieur (6) de la position de repos à une position de décalage au-dessus d'un tamis (34) avec une ouverture de distribution (30) associée, situé dans le fond du récipient extérieur (4).

2. Dispositif de saupoudrage (2) selon la revendication 1, **caractérisé en ce que** le récipient extérieur (4) est ouvert vers le haut, et le récipient intérieur (6) avec au moins un accumulateur d'énergie (24) fixé à celui-ci peut être retiré du récipient extérieur (4) vers le haut.

3. Dispositif de saupoudrage (2) selon la revendication 1 ou 2, **caractérisé en ce que** dans la position de service du récipient intérieur (6) dans le récipient extérieur (4), ledit au moins un accumulateur d'énergie (24) peut être relié à la paroi latérale (8) du récipient extérieur (4) par complémentarité de formes et/ou par adhérence.

4. Dispositif de saupoudrage (2) selon l'une quelconque des revendications précédentes, **caractérisé en ce qu'**un ou plusieurs accumulateurs de force (24) est/sont réalisé(s) sous forme de ressort elliptique.

5. Dispositif de saupoudrage (2) selon l'une quelconque des revendications précédentes, **caractérisé en ce que** l'extrémité supérieure du récipient intérieur (6) présente une collerette (16) s'évasant vers le haut et dépassant du récipient extérieur (4).

6. Dispositif de saupoudrage (2) selon la revendication précédente, **caractérisé en ce qu'**un couvercle (18) peut être inséré dans la collerette (16).

7. Dispositif de saupoudrage (2) selon l'une quelconque des revendications précédentes, caractérisé en- ce qu'un couvercle (20) peut être posé sur l'ouverture de distribution (30) qui se trouve sur la face inférieure du récipient extérieur (4).

8. Dispositif de saupoudrage (2) selon l'une quelconque des revendications précédentes, **caractérisé en ce que** sur la face intérieure de la paroi latérale (8) du récipient extérieur (4) est réalisée une rainure de guidage (40) s'étendant en parallèle à l'axe longitudinal (14) du récipient extérieur (4).

9. Dispositif de saupoudrage (2) selon l'une quelconque des revendications précédentes, **caractérisé en ce que** le tamis (34) qui se trouve dans le fond du récipient extérieur (4) présente des membrures de tamisage (38) s'étendant de manière oblique ou transversale au sens de mouvement du récipient intérieur (6) dans le récipient extérieur (4).

10. Dispositif de saupoudrage (2) selon la revendication 9, **caractérisé en ce que** dans l'ouverture de distribution (32) dans le récipient intérieur (6) sont réalisées des membrures de tamisage (38) présentant une orientation opposée aux membrures de tamisage (38) qui se trouvent dans le fond du récipient extérieur (4).
